# EUROPÄISCHE PATENTSCHRIFT

(11) **EP 3 409 521 B1**
(45) Veröffentlichungstag und Bekanntmachung des Hinweises auf die Patenterteilung: **05.08.2020**
(21) Anmeldenummer: 18000471.5
(22) Anmeldetag: 22.05.2018
(51) Int. Cl.: B60J 10/17

(54) **BEFLOCKTER DICHTUNGSSTRANG ZUR ABDICHTUNG BEWEGBARER FAHRZEUGFENSTERSCHEIBEN**
FLOCKED SEALING STRIP FOR SEALING MOVABLE VEHICLE WINDOW PANES
CORDON D'ÉTANCHÉITÉ FLOQUÉ DESTINÉ À ÉTANCHÉIFIER LES VITRES DE VÉHICULE MOBILES

(30) Priorität: 01.06.2017 DE 102017112090
(43) Veröffentlichungstag der Anmeldung: 05.12.2018
(73) Patentinhaber: CQLT SaarGummi Technologies S.à.r.l., 5544 Remich (LU)
(72) Erfinder: Tessier, Bernard, FR-45270 Moulon (FR)
(74) Vertreter: Patentanwälte Bernhardt / Wolff Partnerschaft mbB

(56) Entgegenhaltungen:
- DE-A1-102013 109 567
- US-A1- 2015 266 366
- US-B2- 8 051 607

## Beschreibung

Die Erfindung betrifft einen Dichtungsstrang zur Abdichtung einer bewegbaren Fahrzeugfensterscheibe, der einen Dichtungsabschnitt mit einer Beflockung zur gleitenden Anlage gegen die Fahrzeugfensterscheibe umfasst, wobei die Beflockung durch in einer Vorzugsrichtung senkrecht zur beflockten Oberfläche angeordnete, an einem Ende mit der Oberfläche verklebte Faserstücke gebildet ist.

Herkömmliche für bewegliche Fahrzeugfensterscheiben vorgesehene Dichtungsstränge, deren Beflockung Faserstücke mit einer Längenmasse (Masse pro Länge) größer 3 dTex und einer Länge zwischen 0,75 und 1 mm aufweist, neigen beim Heben und Senken der abgedichteten Fahrzeugfensterscheibe zu Quietschgeräuschen. Insbesondere bei hoher relativer Luftfeuchtigkeit mit Werten größer 80 % treten solche Quietschgeräusche mit hoher Wahrscheinlichkeit auf, z.B. bei einer Umgebungstemperatur von 20 °C und einem Feuchtegehalt größer 15g/m³. Ein ähnlicher Dichtungsstrang ist beispielsweise in US 2015/266366 offenbart.

Der Erfindung liegt die Aufgabe zugrunde, einen neuen Dichtungsstrang der eingangs erwähnten Art zu schaffen, durch dessen Beflockung Quietschgeräusche unterbunden sind.

Der diese Aufgabe lösende Dichtungsstrang nach der Erfindung ist dadurch gekennzeichnet, dass die Längenmasse der Faserstücke bei einer Länge kleiner 0,40 mm unter 0,50 dTex liegt.

Die Erfinder haben herausgefunden, dass sich durch merkliche Reduzierung von Faserdicke und -länge Quietschgeräusche weitgehend unterdrücken und sogar gänzlich vermeiden lassen. Überraschend hat sich gezeigt, dass sich auch bei merklicher Reduzierung von Längenmasse und Faserlänge die das Gleiten der Dichtung auf Glas sichernde Grundfunktion der Beflockung erhalten lässt. Es versteht sich, dass die Erhaltung dieser Grundfunktion einer beliebigen weiteren Reduzierung der Längenmasse und Länge der Faserstücke entgegensteht.

In einer Ausführungsform liegt die Längenmasse bei einer Länge der Faserstücke kleiner 0,35 mm unter 0,45 dTex und weiter bevorzugt liegt die Längenmasse bei einer Faserlänge kleiner 0,30 mm unter 0,30 dTex.

In einer besonders bevorzugten Ausführungsform der Erfindung beträgt die Faserdicke bei einer Faserlänge von 0,30 mm 0,30 dTex.

Das Verhältnis von Faserdicke zu Faserlänge liegt bevorzugt zwischen 1,0 und 1,3 dTex/mm.

Während unterschiedliche Faserstücke innerhalb einer Beflockung möglich sind, stimmen vorzugsweise die Faserstücke in Längenmasse und freier Länge innerhalb der Beflockung überein.

Bei den Faserstücken handelt es sich vorzugsweise um Polyamid- oder/und Polyesterfasern.

Die Erfindung ist nachfolgend anhand beiliegender Zeichnungen weiter erläutert. Es zeigen:
- Fig. 1: einen eine Fahrzeugfensterscheibe abdichtenden Dichtungsstrang mit einer Beflockung in schematischer Darstellung,
- Fig. 2: eine die Geräuschentwicklung durch eine Beflockung beim Verschieben der Fahrzeugfensterscheibe von Fig. 1 erläuternde Darstellung.

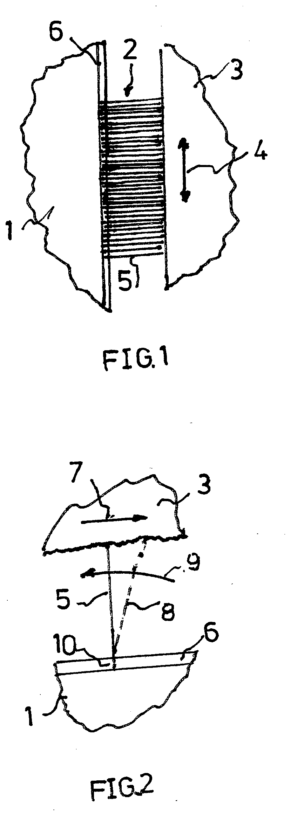

Ein in Fig. 1 ausschnittsweise dargestellter Dichtungsstrang 1 aus EPDM, TPE oder TP weist eine Beflockung 2 auf, über die der Dichtungsstrang 1 gegen eine gemäß Pfeil 4 nach oben und nach unten verschiebbare Fahrzeugfensterscheibe 3, von der Fig. 1 einen Ausschnitt zeigt, anliegt.

Die Beflockung 2 besteht z.B. aus Polyesterfaserstücken 5 gleicher Längenmasse und Länge, die mit einem Ende in einer auf den Dichtungsstrang 1 aufgebrachten Klebeschicht 6 verankert sind. In der schematischen Darstellung von Fig. 1 stehen sämtliche Faserstücke 5 senkrecht auf der beflockten Fläche. Die senkrechte Richtung stellt jedoch nur eine Vorzugsrichtung dar, von der die Faserstücke mehr oder weniger weit abweichen können. Eine näherungsweise senkrechte Ausrichtung der Faserstücke wird in einem herkömmlichen Prozess in einer Beflockungseinrichtung durch ein starkes elektrisches Feld erreicht, das dafür sorgt, dass sich die in einer Beflockungskammer schwebenden Faserstücke infolge ihrer eigenen Polarität ausrichten und etwa senkrecht auf dem Dichtungsstrang bzw. der Klebeschicht absetzen.

Bei Bewegung der Fahrzeugfensterscheibe 3 gemäß Pfeil 7 (Fig. 2) kommt es infolge Mikroadhäsion und gerade bei Feuchtigkeit wirksamen Van-der-Waals-Kräften zur Anhaftung der dem Dichtungsstrang 1 abgewandten Enden von Faserstücken 5 an der Fahrzeugfensterscheibe 3. Gemäß dem als "stick & slip" bezeichneten Phänomen kommt es zur Mitnahme der anhaftenden Enden und Abbiegung des Faserstücks 5 gemäß Strichlinie 8. Zur Mitnahme und Abbiegung können auch geringfügige Unebenheiten der Scheibenoberfläche beitragen.

Mit der Abbiegung entstehende Rückstellkräfte sorgen schließlich für eine Aufhebung der Anhaftung und ein Zurückschnappen der Faserstücke 5 gemäß Pfeil 9 unter Gleitbewegung auf der Scheibenoberfläche.

Bei herkömmlichen Beflockungen mit einer Längenmasse von z.B. 3,3 dTex und einer Faserlänge von 0,80 mm kommt es infolge solchen Ruck-/Gleitens zu störenden Quietschgeräuschen, insbesondere bei hoher Luftfeuchtigkeit mit Werten größer 15g/m³ bei 20 °C (≙ 80 % rel. Luftfeuchte).

Solche Geräusche lassen sich gänzlich vermeiden, wenn zur Herstellung der Beflockung Mikrofasern mit einer Längenmasse von 0,30 dTex bei einer freien Länge von 0,30 mm eingesetzt werden, wobei es sich um Polyamid- vorzugsweise aber Polyesterfasern handeln kann.

Weitere Verringerung von Längenmasse und Länge beeinträchtigt die Grundfunktion der Beflockung. Bei einer Länge der Mikrofasern von nur 0,30 mm Länge erreicht die zur Klebeverbindung notwendige Benetzung der Faserenden mit Klebermaterial bereits und 25 % der Faserhöhe.

Untersuchungen unter Variation von Längenmasse und Faserlänge ergaben, dass bis zu einer Längenmasse von 0,50 dTex und einer Faserlänge von 0,40 mm noch eine deutliche aber bis zu dieser Grenze abnehmende Reduzierung von Quietschgeräuschen zu erreichen ist. Oberhalb dieser Grenze kann das Geräusch kaum von dem Geräusch herkömmlicher Beflockungen z.B. mit den obengenannten Werten unterschieden werden.

Es hat sich herausgestellt, dass zur Beflockung mit Mikrofasern geringer Längenmasse und Länge herkömmlich zur Beflockung eingesetzte Fertigungsanlagen verwendbar sind.

## Patentansprüche

1. Dichtungsstrang (1) zur Abdichtung einer bewegbaren Fahrzeugfensterscheibe (3), der einen Dichtungsabschnitt mit einer Beflockung (2) zur gleitenden Anlage gegen die Fahrzeugfensterscheibe (3) aufweist, wobei die Beflockung (2) durch in einer Vorzugsrichtung senkrecht zur beflockten Oberfläche an einem Ende mit der Oberfläche verklebte Faserstücke gebildet ist, **dadurch gekennzeichnet,**
**dass** die Längenmasse der Faserstücke (5) bei einer Länge der Faserstücke (5) kleiner 0,4 mm unter 0,5 dTex liegt.

2. Dichtungsstrang nach Anspruch 1,
**dadurch gekennzeichnet,**
**dass** die Längenmasse bei einer Faserlänge kleiner 0,35 mm unter 0,50 dTex liegt und insbesondere die Längenmasse bei einer Faserlänge kleiner 0,30 mm unter 0,30 dTex liegt.

3. Dichtungsstrang nach Anspruch 1 oder 2,
**dadurch gekennzeichnet,**
**dass** die Längenmasse bei einer Faserlänge von 0,30 mm 0,30 dTex beträgt.

4. Dichtungsstrang nach einem der Ansprüche 1 bis 3,
**dadurch gekennzeichnet,**
**dass** das Verhältnis von Längenmasse zu Faserlänge zwischen 1,0 und 1,30 dTex/mm liegt.

5. Dichtungsstrang nach einem der Ansprüche 1 bis 4,
**dadurch gekennzeichnet,**
**dass** sämtliche Faserstücke (4) der Beflockung (2) in Längenmasse und Faserlänge übereinstimmen.

6. Dichtungsstrang nach einem der Ansprüche 1 bis 5,
**dadurch gekennzeichnet,**
**dass** es sich bei den Faserstücken um Polyamid- oder/und Polyesterfasern handelt.

## Claims

1. Sealing strand (1) for sealing a movable vehicle window pane (3), having a sealing portion with flocking (2) for sliding abutment against the vehicle window pane (3), wherein the flocking (2) is formed by pieces of fibre which are adhesively bonded at one end to the surface, in a preferred direction perpendicular to the flocked surface, **characterized**
**in that**, with a length of the pieces of fibre (5) being smaller than 0.4 mm, the linear density of the pieces of fibre (5) lies below 0.5 dTex.

2. Sealing strand according to Claim 1,
**characterized**
**in that** the linear density with a fibre length smaller than 0.35 mm lies below 0.50 dTex, and in particular the linear density with a fibre length smaller than 0.30 mm lies below 0.30 dTex.

3. Sealing strand according to Claim 1 or 2,
**characterized**
**in that** the linear density with a fibre length of 0.30 mm is 0.30 dTex.

4. Sealing strand according to one of Claims 1 to 3,
**characterized**
**in that** the ratio of linear density to fibre length lies between 1.0 and 1.30 dTex/mm.

5. Sealing strand according to one of Claims 1 to 4,
**characterized**
**in that** all of the pieces of fibre (4) of the flocking (2) correspond in terms of linear density and fibre length.

6. Sealing strand according to one of Claims 1 to 5,
**characterized**
**in that** the pieces of fibre are polyamide or/and polyester fibres.

## Revendications

1. Profilé d'étanchéité (1) pour la fermeture étanche d'une vitre (3) mobile d'une fenêtre de véhicule, qui présente une section d'étanchéité pourvue d'un flocage (2) pour la butée coulissante contre la vitre (3) de fenêtre de véhicule, le flocage (2) étant formé par des morceaux de fibres collées sur la surface par une extrémité dans une direction préférentielle perpendiculaire à la surface floquée, **caractérisé en ce que** la masse longitudinale des morceaux de fibre (5), à une longueur des morceaux de fibre (5) inférieure à 0,4 mm, est inférieure à 0,5 dTex.

2. Profilé d'étanchéité selon la revendication 1, **caractérisé en ce que** la masse longitudinale, à une longueur des morceaux de fibre inférieure à 0,35 mm, est inférieure à 0,50 dTex et, en particulier, la masse longitudinale, à une longueur des morceaux de fibre inférieure à 0,30 mm, est inférieure à 0,30 dTex.

3. Profilé d'étanchéité selon la revendication 1 ou 2, **caractérisé en ce que** la masse longitudinale, à une longueur de fibre de 0,30 mm, est de 0,30 dTex.

4. Profilé d'étanchéité selon l'une quelconque des revendications 1 à 3, **caractérisé en ce que** le rapport de la masse longitudinale à la longueur de fibre est situé entre 1,0 et 1,30 dTex/mm.

5. Profilé d'étanchéité selon l'une quelconque des revendications 1 à 4, **caractérisé en ce que** tous les morceaux de fibres (4) du flocage (2) concordent en masse longitudinale et en longueur de fibre.

6. Profilé d'étanchéité selon l'une quelconque des revendications 1 à 5, **caractérisé en ce qu'**il s'agit, pour les morceaux de fibre, de fibres de polyamide et/ou de polyester.
